# EUROPEAN PATENT SPECIFICATION

(11) **EP 3 932 104 B1**
(45) Date of publication and mention of the grant of the patent: **16.07.2025**
(21) Application number: 19916896.4
(22) Date of filing: 28.02.2019
(51) Int. Cl.: H04W 24/00, B60C 23/02

(54) **SYSTEMS AND METHODS FOR VEHICLE EVENT DETECTION**
SYSTEME UND VERFAHREN ZUR FAHRZEUGEREIGNISDETEKTION
SYSTÈMES ET PROCÉDÉS DE DÉTECTION D'UN ÉVÉNEMENT DE VÉHICULE

(43) Date of publication of application: 05.01.2022
(73) Proprietor: Calamp Corp., Irvine, California 92618 (US)
(72) Inventor: PATTON, David, B., Irvine, CA 92618 (US)
(74) Representative: EIP
(86) International application number: PCT/US2019/020102
(87) International publication number: WO 2020/176109

(56) References cited:
- WO-A1-2008/143532
- DE-A1- 102018 204 681
- KR-A- 20110 127 841
- US-A1- 2008 278 229
- US-A1- 2011 082 621
- US-A1- 2017 200 329
- US-A1- 2017 203 719
- US-B1- 10 173 547
- US-B2- 8 489 271

## Description

### FIELD OF THE INVENTION

The present invention relates to detecting vehicle events and in particular to waking a vehicle telematics device from a low power sleep mode based on detected changes in vehicle voltage.

### BACKGROUND

Vehicle telematics systems are installed in a variety of applications including, but not limited to, fleet management, vehicle finance, vehicle maintenance, driver management, and/or fuel management. Telematics units are installed in vehicles to provide a variety of telematics functionality in the vehicle. This functionality includes, but is not limited to, emergency warning systems, navigation functionality, safety warnings, and automated driving assistance. Telematics units are also capable of recording data related to the operation of the vehicle and providing that information for analysis, whether in real-time or during a time when the vehicle is being serviced. This information can be used in a variety of applications, such as fleet tracking, shipment tracking, insurance calculations, and in vehicle management and service.

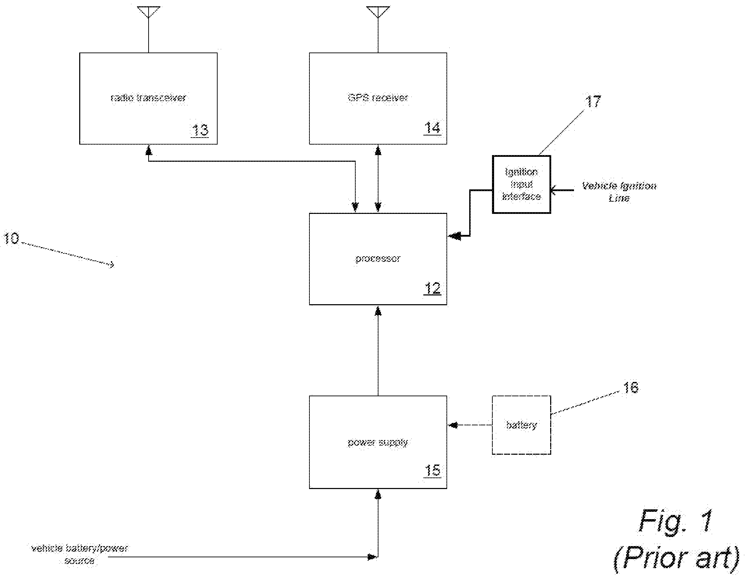

A common configuration for a vehicle telematics system is illustrated in FIG. 1. The vehicle telematics system 10 includes a processor 12 that is configured to communicate with a radio transceiver 13 and a GPS receiver 14. The processor 12, the radio transceiver 13, and the GPS receiver 14 are typically powered by a power supply 15 that is connected via a line to the vehicle's battery. The vehicle telematics system can optionally include its own battery 16 to enable operation when the vehicle battery is removed and/or to prevent depletion of the vehicle battery. In many instances, the vehicle telematics system monitors the ignition line of the vehicle to determine the ignition state of the vehicle using an ignition input interface 17 that is connected to the vehicle ignition line. Monitoring the vehicle ignition state can be useful for reasons including, but not limited to, reporting vehicle ignition state and/or managing power consumption.

A common problem encountered during installation of devices in a motor vehicle that connect to the vehicle's electrical system is that the installer may inadvertently connect an ignition input interface to a wire that is not the vehicle ignition line. U.S. Patent 6,163,690 notes the potential for the ignition sense line of a hands-free adapter for a mobile phone to be incorrectly connected to a line other than the ignition line due to installer error, which can result in the hands-free adaptor believing the ignition is always on and undesirably draining the vehicle's battery. U.S. Patent 6,163,690 proposes a system that checks the correctness of the ignition sense line installation by monitoring the ignition sense line to determine whether the ignition line is switched off within a predetermined time period. In the event that the hands-free adaptor detects that the ignition line is always on, the hands-free adaptor provides an indication that it has been installed incorrectly. US 2017/203719 A1 discloses a system for detecting an operating state of a vehicle engine comprising first and second detectors for detecting when transient noise in a signal from a power line respectively rises above and falls below respective first and second thresholds.

### SUMMARY OF THE INVENTION

Systems and methods for determining vehicle operational status in accordance with embodiments of the invention are disclosed. A first aspect provides a vehicle telematics device according to claim 1.

In another embodiment of the invention, the reference rise voltage amount and the reference drop voltage amount are set by a hardware reference amount.

In an additional embodiment of the invention, the reference rise voltage amount and the reference drop voltage amount are set by a software controlled digital-to-analog converter (DAC).

In yet another additional embodiment of the invention, the output wake signal is indicative of an occurrence of a vehicle event.

In still another additional embodiment of the invention, the vehicle event is at least one event selected from the group consisting of a vehicle engine starting, the vehicle engine being jump started, connecting a trailer to the vehicle, disconnecting a trailer from the vehicle, turning on an electric winch on the vehicle, turning on a starter motor of the vehicle, staring an alternator of the vehicle, connecting a battery to the vehicle, and disconnecting a battery from the vehicle.

In yet still another additional embodiment of the invention, the event detection circuit is a component of a vehicle telematics device.

In yet another embodiment of the invention, the high pass filters are configured to detect rapid changes in the vehicle voltage and to filter out slow changes in the vehicle voltage.

In still another embodiment of the invention, the microprocessor, on receiving the wake signal from the event detection circuit, is directed to confirm the occurrence of a vehicle event.

In yet still another embodiment of the invention, the microprocessor confirms the occurrence of the vehicle event by monitoring an ignition line of the vehicle to determine an operational status of the vehicle.

In yet another additional embodiment of the invention, the microprocessor, on receiving the wake signal from the event detection circuit, is directed to wake the vehicle telematics device from a sleep mode of operation.

A second aspect of the invention includes a system for vehicle event detection according to claim 10.

In still another additional embodiment of the invention, the wake signal is transmitted to the controller of the vehicle telematics device to wake the vehicle telematics device from a sleep mode of operation.

In yet still another additional embodiment of the invention, the wake signal is indicative of an occurrence of a vehicle event.

In yet another embodiment of the invention, the vehicle event is at least one event selected from the group consisting of a vehicle engine starting, the vehicle engine being jump started, connecting a trailer to the vehicle, disconnecting a trailer from the vehicle, turning on an electric winch on the vehicle, turning on a starter motor of the vehicle, staring an alternator of the vehicle, connecting a battery to the vehicle, and disconnecting a battery from the vehicle.

In still another embodiment of the invention, the event detection device is a component of the vehicle telematics device.

In yet still another embodiment of the invention, the controller of the vehicle telematics device, on receiving the wake signal from the vehicle event detection device, is directed to confirm the occurrence of a vehicle event.

In yet another additional embodiment of the invention the controller confirms the occurrence of the vehicle event by monitoring an ignition line of the vehicle to determine an operational status of the vehicle.

In still another additional embodiment of the invention, the controller, on receiving the wake signal from the vehicle event detection device, is directed to wake the vehicle telematics device from a sleep mode of operation.

In yet still another additional embodiment of the invention, the first threshold and the second threshold are 2 volts.

In yet another embodiment of the invention, the first threshold is dependent on a type of vehicle event being detected.

### BRIEF DESCRIPTION OF THE DRAWINGS

FIG. 1 is a conceptual illustration of a common configuration for a vehicle telematics system in accordance with an embodiment of the invention.
FIG. 2 is a conceptual illustration of a vehicle event detection device communicating with a vehicle telematics device in order to wake the vehicle telematics device from a sleep mode in accordance with an embodiment of the invention.
FIG. 3 is a conceptual illustration of a vehicle device that includes a vehicle event detector that is configured to detect vehicle events, including a vehicle ignition state without a direct connection to the vehicle ignition line in accordance with an embodiment of the invention.
FIG. 4 is a conceptual illustration of an architecture of a vehicle event detection device that uses a low pass filter in connection with a set of high pass filters and low power comparators to detect rapid changes in vehicle voltages in accordance with an embodiment of the invention.
FIG. 5 is a conceptual illustration of an architecture of a vehicle event detection device implemented using a microcontroller and one or more ADCs in accordance with an embodiment of the invention.
FIG. 6 is a chart conceptually illustrating vehicle battery voltage when a vehicle's ignition state goes from OFF to ON.
FIG. 7 illustrates a process for detecting vehicle events based on voltage changes in accordance with an embodiment of the invention.

### DETAILED DESCRIPTION

Turning now to the drawings, systems and methods for detecting vehicle events in order to wake a vehicle telematics device from a sleep mode in accordance with various embodiments of the invention are disclosed. In many instances, vehicle event detection devices can be installed in a location in a vehicle where a vehicle ignition line is unavailable to the device. In several embodiments, the vehicle ignition line is available and the vehicle event detection device does not utilize a connection to the vehicle ignition line. In a number of embodiments, vehicle ignition state (i.e. the operational status of the vehicle) is ascertained by monitoring the vehicle for signs indicative of the vehicle ignition state without directly connecting to the vehicle ignition line. Information indicative of vehicle ignition state (i.e. vehicle status data) can be ascertained by observing characteristics of the vehicle including but not limited to changes in vehicle voltages, and in particular detecting either a rapid drop or rapid rise in voltage indicative of a vehicle event.

In many embodiments, the vehicle event detection device provides a hardware implementation that can detect a variety of vehicle events while a vehicle telematics device is either powered off or in a sleep mode of operation. These vehicle events can include detecting that a vehicle is being started, which would thus trigger a waking up of the vehicle telematics device installed in the vehicle. In certain embodiments, the vehicle telematics device can then confirm that the event has occurred. In particular, to minimize the power being consumed, it may be beneficial to keep a vehicle telematics device in a low power sleep mode, or even a power off state while the vehicle is turned off. However, there is a need to still be able to detect vehicle events, such as the vehicle engine starting, while minimizing the amount of power being consumed. Accordingly, many embodiments provide a low power vehicle event detection device that is capable of detecting vehicle events while the vehicle telematics device is in a sleep mode of operation and the vehicle is turned off. Accordingly, certain embodiments provide a two phase event detection system that includes a hardware ignition detection circuit that detects a vehicle event such as vehicle engine starting, and upon detecting the vehicle event, may wake a controller of a vehicle telematics device that places the device into a low power state, whereby the controller may then verify the occurrence of the vehicle event. In certain embodiments, the controller can verify the vehicle event using a variety of mechanisms, including by monitoring an ignition line of the vehicle, by detecting vibrations indicative of engine idling from accelerometers, gyroscopes, and/or movement of the vehicle via GPS, among various other mechanisms.

In many embodiments, the vehicle event detection device is able to also detect certain other events in addition to (or as an alternative to) a vehicle engine starting that may also be desirable to detect including (but not limited to) whether the vehicle is connected to another vehicle to jump start the vehicle, turning on an electric winch of the vehicle, connecting or disconnecting a trailer to/from the vehicle, turning on a starter motor in various conditions including a weak battery and a good battery, detecting an alternator starting, detecting a voltage rise in an electric vehicle, disconnecting and/or connecting the vehicle battery, among numerous other detectable events that may cause a change in voltage within the vehicle. The vehicle event detection device may be configured to detect any of a variety of vehicle events while the vehicle telematics unit is in a sleep mode of operation.

In many embodiments, the vehicle event detection device may be implemented as a hardware circuit providing minimal power consumption. In several embodiments, the vehicle event detection device may be implemented as a combination of software and/or hardware. In particular, the vehicle event detection device may include a microcontroller that uses ADCs and software to monitor for rapid changes in a vehicle voltage indicative of a vehicle event. In other embodiments, the vehicle event detection device may be implemented as a software program for execution on a processor within the vehicle telematics unit installed on the vehicle.

In many embodiments, a hardware implementation of the vehicle detection device may use a low-pass filter to remove spurious noise followed by a set of highpass filters that can detect either a drop in voltage or a rise in voltage. In several embodiments, high pass filters are used to ignore slow changes in a vehicle voltage. In certain embodiments, the amount of drop or rise can be set by a hardware reference signal. In several embodiments, the reference signal can be set by a software controlled digital-to-analog converter (DAC). The hardware reference signal and/or DAC signal may set forth the amount of voltage rise or drop needed in order to indicate that a vehicle event has occurred, such as the vehicle engine is being started. In many embodiments, the combination of detecting for either a drop or a rise in voltage enables detecting a vehicle start in various conditions, including weak battery, good battery, alternator started, a voltage rise in an electric vehicle, among others.

Several embodiments may use a combination of hardware and software to detect vehicle events. In particular, certain embodiments may use a microcontroller and several analog-to-digital convertors (ADCs) and software to monitor the vehicle voltage. Accordingly, the microcontroller may be in set into a sleep state and occasionally wake up to measure the vehicle voltage and make decisions accordingly. In certain embodiments, the vehicle event detection can operate even when the vehicle telematics device is in a constant sleep state and the software is not executing. Accordingly, many embodiments of the vehicle detection device are able to consume just a few microamperes of power when the vehicle telematics device has been turned off.

Although much of the following discussion references vehicle telematics systems, systems and methods in accordance with embodiments of the invention can be implemented in other devices that connect to a vehicle power supply. Systems and methods for using a device added to the vehicle after the manufacture of the vehicle without a direct connection to the vehicle ignition line that can be utilized in accordance with embodiments of the invention are described in U.S. Patent No. 8,489,271, titled "Systems and Methods for Virtual Ignition Detection" and issued July 16, 2013. The vehicle event detection device in accordance with many embodiments can be an addition to such systems that can enable even lower power operation while detecting events. Vehicle event detection devices for detecting vehicle events that trigger waking up vehicle telematics devices and/or other devices in accordance with embodiments are described below.

### Vehicle Event Detection Device

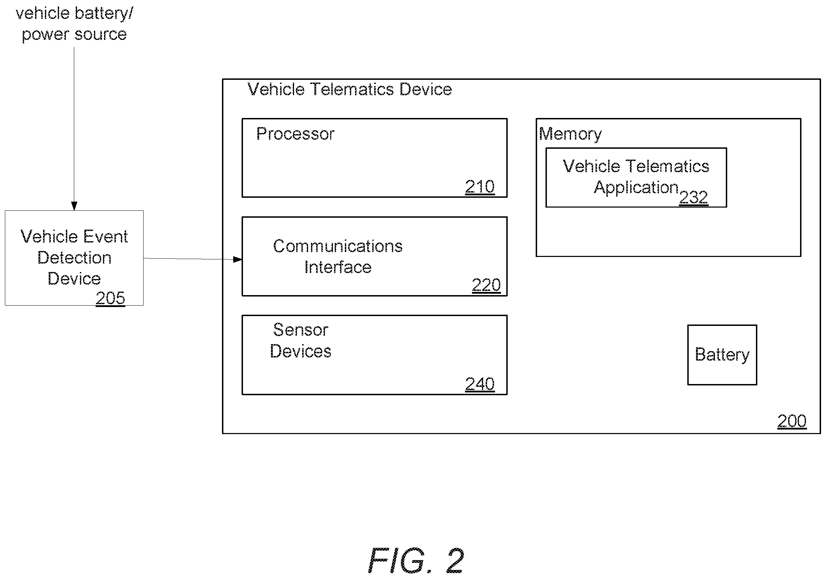

Vehicle event detection devices in accordance with embodiments of the invention can measure vehicle voltages and determine when the vehicle has been started, among various other events, based on rapid changes in the vehicle voltages, which can then be used to trigger a waking up of a vehicle telematics device from a power off or a low power/sleep mode of operation. A conceptual illustration of a vehicle event detection device communicating with a vehicle telematics device in order to wake the vehicle telematics device from a sleep mode in accordance with an embodiment of the invention is shown in FIG. 2. The vehicle event detection device 205 may monitor a vehicle voltage and detect vehicle events based on changes in the vehicle voltage. The vehicle event detection device 205 may send a signal to the vehicle telematics device 200 in order to wake the telematics device from a sleep state of operation. This allows the vehicle telematics device 200 to operate in a sleep mode in order to minimize the amount of power being consumed while the vehicle is turned off, and yet still be able to wake up based on detected vehicle events. Accordingly, the vehicle event detection device and the vehicle telematics device can provide a two phase ignition detection system whereby the vehicle event detection device provides a low power hardware ignition detection circuit that wakes a microprocessor of a controller of the vehicle telematics device into a low power state, which can attempt to verify the actual ignition event by monitoring the ignition line and/or through detection of vibration indicative of engine idling from accelerometers, gyroscopes, and/or movement of the vehicle via GPS. Accordingly, the vehicle event detection device may provide a low power hardware circuit that can detect events to wake a microprocessor of the vehicle telematics device.

The vehicle telematics device 200 may include a controller that includes processor 210 in communication with memory 230. The vehicle telematics device 200 can also include one or more communication interfaces 220 configured to send and receive data. In a number of embodiments, the communication interface 220 may be in communication with the processor 210, the memory 230, and/or the sensor device(s) 240. In several embodiments, the memory 230 can be any form of storage configured to store a variety of data, including, but not limited to, a vehicle telematics application 232. In many embodiments, vehicle telematics application 232 can be stored using an external server system and received by the vehicle telematics device 200 using the communications interface 220.

The processor 210 may be directed by the vehicle status determination application 232 to perform a variety of vehicle telematics processes. The vehicle telematics processes may include, upon receiving a wake signal from a vehicle event detection circuitry, confirming the occurrence of a vehicle event and/or waking from a sleep mode of operation. Vehicle telematics processes can also include obtaining data from a variety of sensor devices, determining vehicle state data, and generating vehicle trip data. Sensor devices 240 may include RPM sensors, voltage sensors, GPS receivers, noise sensors, vibration sensors, acceleration sensors, gyroscopes, and any other device capable of measuring data regarding a vehicle as appropriate to the requirements of specific applications of embodiments of the invention. Sensor devices 240 can be included within the vehicle telematics device 200 and/or located external to the vehicle telematics device 200. The vehicle telematics device 200 can communicate with external sensor devices, including the vehicle event detection device 205, using the communications interface 220, such as via a vehicle data bus, I/O interface, and/or a network connection as appropriate to the requirements of specific applications of embodiments of the invention.

Although a specific architecture for a vehicle event detection device for waking a vehicle telematics device in accordance with an embodiment of the invention is conceptually illustrated in FIG. 2, any of a variety of architectures, including those where the vehicle event detection device is included as part of the hardware and/or software within the vehicle telematics device and/or that store data or applications on disk or some other form of storage and are loaded into memory at runtime, can also be utilized. In a variety of embodiments, the memory 230 may include circuitry such as, but not limited to, memory cells constructed using transistors, that are configured to store instructions. Similarly, the processor 210 can include logic gates formed from transistors (or any other device) that are configured to dynamically perform actions based on the instructions stored in the memory. In several embodiments, the instructions are embodied in a configuration of logic gates within the processor to implement and/or perform actions described by the instructions. In this way, the systems and methods described herein can be performed utilizing both general-purpose computing hardware and by single-purpose devices.

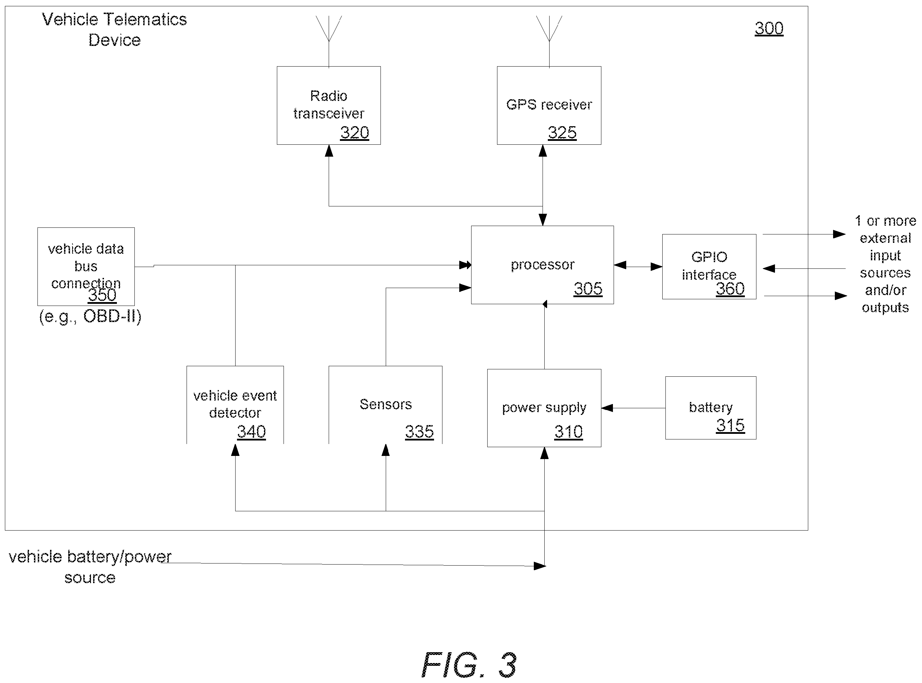

In many embodiments, a vehicle event detection device that can be used to wake a vehicle device may be a part of the vehicle device. A vehicle device that includes a vehicle event detector that is configured to detect vehicle events, including a vehicle ignition state without a direct connection to the vehicle ignition line in accordance with several embodiments is illustrated in FIG. 3. In its simplest configuration, the vehicle device 300 includes a processor 305, and a power supply 310 that is connected to the vehicle power source. A battery can be optionally provided 315 to provide an alternative source of power to the power supply. When the device is a vehicle telematics system, the device 300 may also include a radio transceiver 320 and a GPS receiver 325. The device 300 may include a vehicle event detector 340 that monitors a vehicle voltage to detect for both rapid rises and/or rapid drops in the vehicle voltage and, based on the amount of the voltage rise and/or drop, the vehicle event detector can identify the occurrence of a vehicle event. Based on the detection of a vehicle event, the vehicle event detector 340 can wake the vehicle device 300, by communicating with the processor 305, from a sleep and/or power off mode of operation. In certain embodiments, the processor 305, upon receiving a wake signal from the vehicle event detector 340, may verify the detected event using various mechanisms, including by monitoring an ignition line of the vehicle, by detecting vibrations indicative of engine idling from data obtained from a variety of sensors, including accelerometers, gyroscopes, and/or movement data captured from a GPS of the vehicle.

The processor can also obtain position information via the GPS receiver 325 and communicate information, including but not limited to position information, with external devices over a wireless communication link using the radio transceiver 320. In a number of embodiments, the wireless transceiver is configured to communicate via a mobile or cell phone network. The processor 305 can also communicate to other vehicle devices connected to the vehicle bus via the vehicle bus though the vehicle data bus connection 350. The processor 305 can also communicate with one or more external input sources and/or outputs via the general-purpose input/output (GPIO) interface 360.

In many embodiments, the device illustrated in FIG. 3 can be configured to not need to directly connect to a vehicle ignition line in order to detect vehicle events, including a vehicle engine starting, among other events. Instead, the device can detect vehicle events using one of a variety of techniques that monitor for vehicle voltage drops and/or voltage rises, as described in detail below. Although a specific device configuration is shown in FIG. 3, devices in accordance with embodiments of the invention can include any of a variety of configurations, including where the vehicle event detector is implemented as stand alone device outside of the vehicle device and communicates with the vehicle device based on wake up events as appropriate to the requirements of specific applications in accordance with embodiments of the invention. Various techniques for detecting vehicle events based on monitoring for rapid changes in vehicle voltages in accordance with embodiments of the invention are discussed below.

### Event Detection Device Architecture

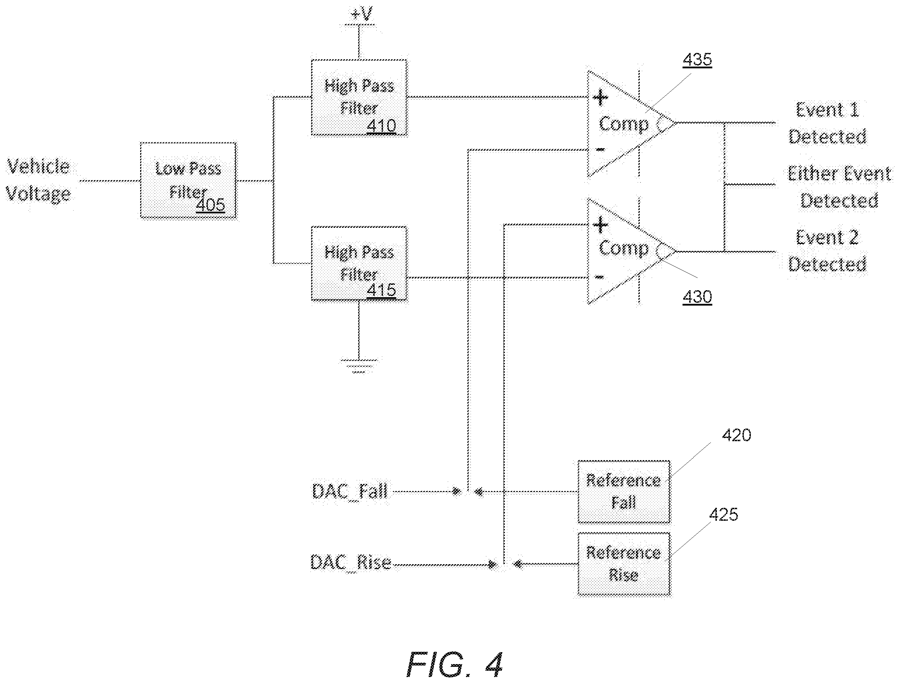

As has previously been described, detecting a vehicle event may be based on detecting a rapid voltage drop or a voltage rise within the vehicle voltage system. As such, while a vehicle is functioning properly, the vehicle voltage may remain quite stable. There may be high-frequency noise caused by any of a variety of sources, including the vehicle alternator, computers, communications buses, actuators, among various others. However, the average voltage change due to these events and/or sources tends to be minimal. Furthermore, while the vehicle is running, there are various mechanisms for detecting these types of events are happening. However, when the vehicle is turned off, there are various events that are desirable to detect, but that may need an architecture that consumes a very minimal amount of power. As noted above, these events may include detecting an engine starting, being jump started, a vehicle being connected to a trailer, among various other events that may occur while a vehicle is turned off. In order to detect these events while a vehicle is turned off, many embodiments provide for a low power consumption two phase event detection device that is able to detect events using a particular configuration of low power components, including low pass filters, high pass filters and very low power comparators, in order to monitor and detect rapid drops and rises in a vehicle voltage that would arise during a vehicle event, and upon detecting the vehicle events, outputting a signal to a controller of a vehicle telematics device to wake the telematics device from a sleep mode of operation. An architecture of a vehicle event detection device that uses a low pass filter in connection with a set of high pass filters and low power comparators to detect rapid changes in vehicle voltages in accordance with several embodiments of the invention is illustrated in Fig. 4.

In particular, the device includes a low pass filter 405 that filters a vehicle voltage to removes spurious noise followed by a set of high pass filters 410 and 415 to detect either a drop in voltage or a rise in voltage. The high pass filters 410 and 415 may ignore slow changes in vehicle voltage, which would not be indicative of a vehicle event such as an engine starting, which would likely cause a large and rapid change to the vehicle system voltage. The amount of drop or rise can be set by a hardware reference, illustrated as the Reference Fall signal 420 and the reference rise signal 425. Each of these signals can be provided as in input to a comparator 430 and 435. In particular, comparator 435 can compare the filtered signal received from the high pass filter 410 with the reference fall signal 420 in order to see if a sufficient voltage drop has occurred, and if so, a corresponding event one detected output signal may be output. Likewise, comparator 430 can compare the filtered signal received from the high pass filter 415 with the reference rise signal 425 to determine whether a sufficient voltage rise has occurred, and if so, a corresponding event two detected output signal may be output. In certain embodiments, the amount of the voltage drop or voltage rise of the reference fall 420 and reference rise 425 signals may be set by a software controlled digital-to-analog converter (DAC). In other embodiments, the amount of the voltage drop or voltage rise can be set of a hardware reference signal. In particular, the reference or DAC may determine the amount of voltage rise or drop needed to indicate that the vehicle has been started. The combination of detecting either a drop or a rise in voltage may enable detecting various events while the device is sleeping.

Although Fig. 4 illustrates a particular architecture of an event detection device using a set of low pass and high pass filters and low power comparators, any of a variety of architectures may be utilized as appropriate to the requirements of specific applications in accordance with various embodiments of the invention.

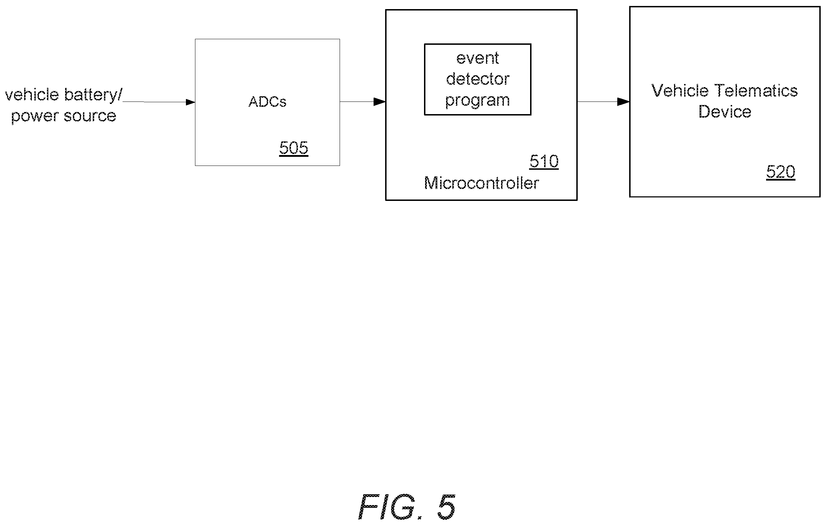

Event detection devices can be implemented in hardware, a combination of hardware and software, and/or software. The power consumption may vary depending on the particular architecture utilized. In particular, certain embodiments may use a microcontroller and one or more ADCs in order to monitor the vehicle voltage. An architecture of a vehicle event detection device implemented using a microcontroller and one or more ADCs in accordance with various embodiments of the invention is illustrated in Fig. 5. In particular, the one or more ADCs 505 can sense a vehicle voltage provided from a power source such as a vehicle battery and provide the digital sensed amount to the microcontroller 510. The microcontroller 510 can be in a sleep state most of the time and occasionally wake up to measure the voltage and make a decision based on the voltage. In certain embodiments, the microcontroller 510 may use an event detector program stored in a memory of the microcontroller that can be used to monitor for rapid changes in the vehicle voltage, such as a rise or drop of at least 2 volts, and upon detecting this change, may output a wake device signal to vehicle device 520. The vehicle device 520, upon receiving the wake signal, may wake from a sleep mode of operation and may also confirm the occurrence of the vehicle event. Although Fig. 5 illustrates a particular architecture that uses a microcontroller and ADCs to monitor for rapid changes in vehicle voltages, any of a variety of architectures may be utilized as appropriate to the requirements of specific applications in accordance with various embodiments of the invention.

As described above, certain vehicle events may trigger a rapid drop or rise in a vehicle voltage. These events may include a vehicle engine starting and a vehicle engine stopping.

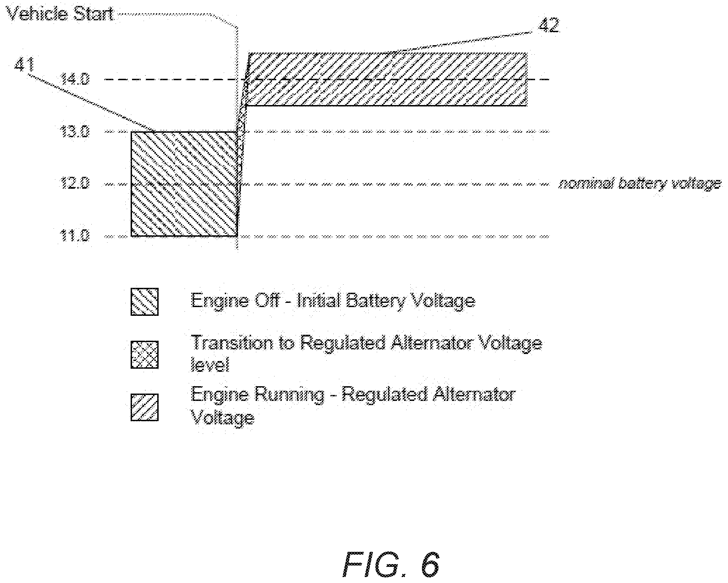

A chart conceptually illustrating vehicle battery voltage when a vehicle's ignition state goes from OFF to ON is illustrated in FIG. 6. At startup (transitions due to starter motor load are not shown), the voltage will immediately increase from the initial battery voltage 41 to the voltage output by the regulator of the vehicle alternator 42. The battery can initially be at a voltage ranging from heavily discharged to a voltage close to that of the alternator (especially when the vehicle was recently shut off and surface charge has not yet dissipated). The vehicle event detection device can look for increases (and/or decreases) in voltage level indicative of the ignition state transitioning from OFF to ON. In addition, the processor can combine information collected through the input voltage measurement interface in combination with other information including but not limited to information collected via a vehicle bus in order to detect a vehicle event and to wake up a vehicle device.

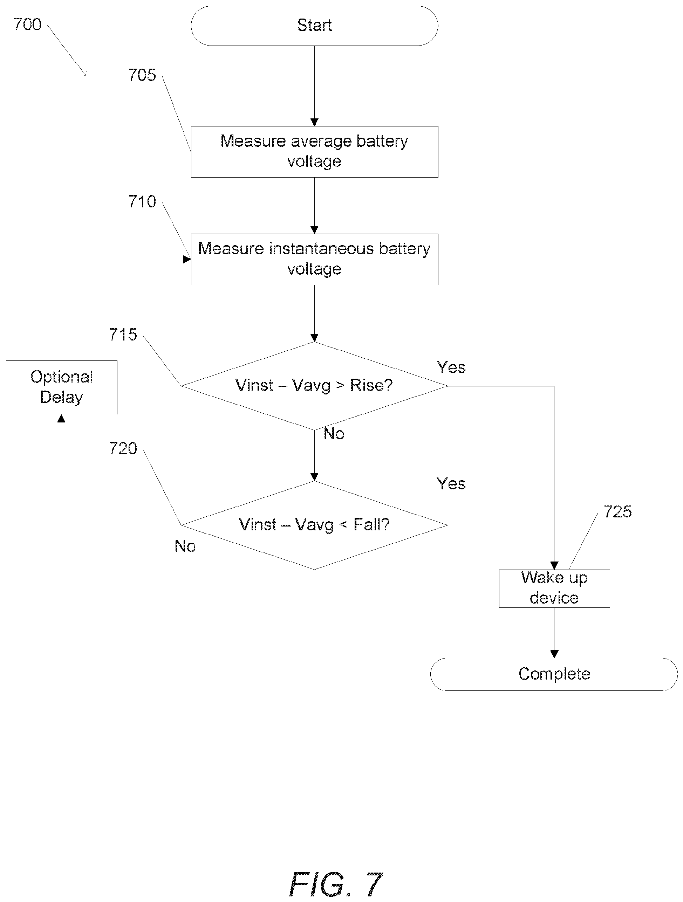

A process for detecting vehicle events based on voltage changes in accordance with an embodiment of the invention is illustrated in Fig. 7. The process 700 can include measuring (705) the average battery voltage. The process can then measure (710) the instantaneous battery voltage. The process may determine (715) whether the difference between the instantaneous voltage and the average voltage is greater than a rise threshold reference value. In certain embodiments, the rise threshold value can be adjusted based on the type of event being detected. Furthermore, the values may be ascertained by experimental tests that monitor the corresponding voltage changes for particular events. For example, tests may reveal that a vehicle engine start may trigger a 2 volt rapid increase in the vehicle voltage system. Other events may utilize different threshold values and the process can identify a type of event based on the amount of voltage change being detected. If the difference between the instantaneous voltage and average voltage is greater than the rise threshold value, the process may wake up (725) a device. If the difference is less than the rise value, the process determines (720) whether the difference between the instantaneous voltage and the average voltage is less than a fall voltage threshold value, and if so, the process may wake up (725) the device. In certain embodiments, the device may confirm the occurrence of the vehicle event using various mechanisms, including monitoring an ignition line of the vehicle and/or using sensor data received from various vehicle sensors to determine the operational state of the vehicle engine. Otherwise, the process completes.

Specific processes for detecting vehicle events in accordance with embodiments of the invention are described above with respect to FIG. 7; however, any number of processes, including those that measure other electrical properties such as current among various others, can be utilized as appropriate to the requirements of a specific application in accordance with embodiments of the invention.

Although the present invention has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present invention can be practiced otherwise than specifically described without departing from the scope of the invention as defined in the appended claims. Thus, embodiments of the present invention should be considered in all respects as illustrative and not restrictive. Accordingly, the scope of the invention should be determined not by the embodiments illustrated, but by the appended claims.

## Claims

1. A vehicle telematics device installed within a vehicle, comprising:
a controller comprising a microprocessor and memory storing instructions, wherein the controller is configured to operate in a sleep mode of operation and a wake mode of operation and wherein the controller consumes less power while in the sleep mode relative to the wake mode; and
an event detection circuit comprising:
a low pass filter configured to filter, while the controller is in the sleep mode, a voltage of a battery of the vehicle to remove noise to produce a filtered voltage at an output of the low-pass filter;
a first high pass filter having an input electrically connected to the output of the low pass filter to receive the filtered voltage from the low pass filter and configured to detect, while the controller is in the sleep mode, a rise in the filtered voltage;
a first comparator having an inverting input electrically connected to an output of the first high pass filter and configured to compare, while the controller is in the sleep mode, the rise in the filtered voltage with a reference rise voltage amount received at a non-inverting input of the first comparator and if the rise in the filtered voltage is greater than the reference rise voltage amount, to trigger the event detection circuit to output a wake signal to the microprocessor of the controller;
a second high pass filter having an input electrically connected to the output of the low pass filter to receive the filtered voltage from the low pass filter and configured to detect, while the controller is in the sleep mode, a drop in the filtered voltage;
a second comparator having a non-inverting input electrically connected to an output of the second high pass filter and configured to compare, while the controller is in the sleep mode, the drop in the filtered voltage with a reference drop voltage amount received at an inverting input of the second comparator and if the drop in the filtered voltage is less than the reference drop amount, to trigger the event detection circuit to output the wake signal to the microprocessor of the controller;
wherein the microprocessor, on receiving the wake signal from the event detection circuit, is directed to change from the sleep mode to the wake mode.

2. The vehicle telematics device of claim 1, wherein the reference rise voltage amount and the reference drop voltage amount are set by a hardware reference amount.

3. The vehicle telematics device of claim 1, wherein the reference rise voltage amount and the reference drop voltage amount are set by a software controlled digital-to-analog converter (DAC).

4. The vehicle telematics device of claim 1, wherein the vehicle event is at least one event selected from the group consisting of a vehicle engine starting, the vehicle engine being jump started, connecting a trailer to the vehicle, disconnecting a trailer from the vehicle, turning on an electric winch on the vehicle, turning on a starter motor of the vehicle, staring an alternator of the vehicle, connecting a battery to the vehicle, and disconnecting a battery from the vehicle.

5. The vehicle telematics device of claim 1, wherein the event detection circuit is a component of a vehicle telematics device.

6. The vehicle telematics device of claim 1, wherein the high pass filters are configured to detect rapid changes in the filtered voltage and to filter out slow changes in the vehicle filtered voltage.

7. The vehicle telematics device of claim 1, wherein the microprocessor, on receiving the wake signal from the event detection circuit, is directed to confirm the occurrence of a vehicle event.

8. The vehicle telematics device of claim 7, wherein the microprocessor confirms the occurrence of the vehicle event by monitoring an ignition line of the vehicle to determine an operational status of the vehicle.

9. The vehicle telematics device of claim 1, wherein the microprocessor, on receiving the wake signal from the event detection circuit, is directed to wake the vehicle telematics device from a sleep mode of operation.

10. A system for vehicle event detection, comprising:
a vehicle telematics device including a controller configured to operate in a sleep mode of operation and a wake mode of operation, wherein the controller consumes less power while in the sleep mode relative to the wake mode; and
a vehicle event detection device including:
a microcontroller comprising a memory storing vehicle event detection instructions; and
a plurality of analog-to-digital convertors (ADCs) configured to sense an analog vehicle voltage signal and to convert the analog vehicle voltage signal to a digital signal;
wherein the vehicle event detection device is installed in a vehicle; and
wherein the vehicle event detection device instructions instruct the microcontroller, while the controller is in the sleep mode, to:
wake up from a sleep mode of operation;
measure an instantaneous vehicle voltage using the plurality of ADCs;
compare the instantaneous vehicle voltage with an average vehicle voltage;
if the difference between the instantaneous vehicle voltage and the average vehicle voltage is greater than a first threshold value or less than a second threshold value, output a wake signal to the controller of the vehicle telematics device, otherwise, to revert back to the sleep mode of operation,
wherein the controller of the vehicle telematics device is configured to, in response to receipt of the wake signal from the event detection circuit, change from the sleep mode to the wake mode.

11. The vehicle event detection device of claim 10, wherein the wake signal is indicative of an occurrence of a vehicle event.

12. The vehicle event detection device of claim 11, wherein the vehicle event is at least one event selected from the group consisting of a vehicle engine starting, the vehicle engine being jump started, connecting a trailer to the vehicle, disconnecting a trailer from the vehicle, turning on an electric winch on the vehicle, turning on a starter motor of the vehicle, staring an alternator of the vehicle, connecting a battery to the vehicle, and disconnecting a battery from the vehicle.

13. The vehicle event detection device of claim 10, wherein the event detection device is a component of the vehicle telematics device.

14. The vehicle event detection device of claim 10, wherein the first threshold is dependent on a type of vehicle event being detected.

## Patentansprüche

1. Innerhalb eines Fahrzeugs installierte Fahrzeugtelematikvorrichtung, umfassend:
eine Steuerung, umfassend einen Mikroprozessor und einen Speicher, der Anweisungen speichert, wobei die Steuerung konfiguriert ist, um in einem Betriebsruhemodus und einem Betriebswachmodus zu arbeiten, und wobei die Steuerung relativ zu dem Wachmodus weniger Strom verbraucht, wenn sie sich in dem Ruhemodus befindet; und
eine Ereigniserkennungsschaltung, umfassend:
einen Tiefpassfilter, der konfiguriert ist, um eine Spannung einer Batterie des Fahrzeugs zu filtern, während die Steuerung sich in dem Ruhemodus befindet, um Rauschen zu entfernen, um an einem Ausgang des Tiefpassfilters eine gefilterte Spannung zu erzeugen;
einen ersten Hochpassfilter, der einen Eingang aufweist, der mit dem Ausgang des Tiefpassfilters elektrisch verbunden ist, um die gefilterte Spannung von dem Tiefpassfilter zu empfangen, und konfiguriert ist, um einen Anstieg der gefilterten Spannung zu erkennen, während die Steuerung sich in dem Ruhemodus befindet;
einen ersten Komparator, der einen invertierenden Eingang aufweist, der mit einem Ausgang des ersten Hochpassfilters elektrisch verbunden und konfiguriert ist, um, während die Steuerung sich in dem Ruhemodus befindet, den Anstieg der gefilterten Spannung mit einem Referenzanstiegsspannungsbetrag zu vergleichen, der an einem nicht invertierenden Eingang des ersten Komparators empfangen wird, und, falls der Anstieg der gefilterten Spannung größer als der Referenzanstiegsspannungsbetrag ist, die Ereigniserkennungsschaltung auszulösen, um ein Wecksignal an den Mikroprozessor der Steuerung auszugeben;
einen zweiten Hochpassfilter, der einen Eingang aufweist, der mit dem Ausgang des Tiefpassfilters elektrisch verbunden ist, um die gefilterte Spannung von dem Tiefpassfilter zu empfangen, und konfiguriert ist, um eine Abnahme der gefilterten Spannung zu erkennen, während die Steuerung sich in dem Ruhemodus befindet;
einen zweiten Komparator, der einen nicht invertierenden Eingang aufweist, der mit einem Ausgang des zweiten Hochpassfilters elektrisch verbunden und konfiguriert ist, um, während die Steuerung sich in dem Ruhemodus befindet, die Abnahme der gefilterten Spannung mit einem Referenzabfallspannungsbetrag zu vergleichen, der an einem invertierenden Eingang des zweiten Komparators empfangen wird, und, falls die Abnahme der gefilterten Spannung kleiner als der Referenzabnahmebetrag ist, die Ereigniserkennungsschaltung auszulösen, um das Wecksignal an den Mikroprozessor der Steuerung auszugeben;
wobei der Mikroprozessor bei dem Empfangen des Wecksignals von der Ereigniserkennungsschaltung angewiesen wird, von dem Ruhemodus in den Wachmodus zu wechseln.

2. Fahrzeugtelematikvorrichtung nach Anspruch 1, wobei der Referenzanstiegsspannungsbetrag und der Referenzabfallspannungsbetrag durch einen Hardware-Referenzbetrag festgelegt werden.

3. Fahrzeugtelematikvorrichtung nach Anspruch 1, wobei der Referenzanstiegsspannungsbetrag und der Referenzabfallspannungsbetrag durch einen softwaregesteuerten Digital-Analog-Wandler (DAC) festgelegt werden.

4. Fahrzeugtelematikvorrichtung nach Anspruch 1, wobei das Fahrzeugereignis mindestens ein Ereignis ist, das aus der Gruppe ausgewählt ist, bestehend aus einem Starten des Fahrzeugmotors, einem Starthilfegeben für den Fahrzeugmotor, einem Verbinden eines Anhängers mit dem Fahrzeug, einem Lösen eines Anhängers von dem Fahrzeug, einem Einschalten einer elektrischen Winde an dem Fahrzeug, dem Einschalten eines Anlassers des Fahrzeugs, dem Starten eines Generators des Fahrzeugs, dem Verbinden einer Batterie mit dem Fahrzeug und dem Lösen einer Batterie von dem Fahrzeug.

5. Fahrzeugtelematikvorrichtung nach Anspruch 1, wobei die Ereigniserkennungsschaltung eine Komponente einer Fahrzeugtelematikvorrichtung ist.

6. Fahrzeugtelematikvorrichtung nach Anspruch 1, wobei die Hochpassfilter konfiguriert sind, um schnelle Änderungen in der gefilterten Spannung zu erkennen und um langsame Änderungen in der gefilterten Fahrzeugspannung herauszufiltern.

7. Fahrzeugtelematikvorrichtung nach Anspruch 1, wobei der Mikroprozessor bei dem Empfangen des Wecksignals von der Ereigniserkennungsschaltung angewiesen wird, das Auftreten eines Fahrzeugereignisses zu bestätigen.

8. Fahrzeugtelematikvorrichtung nach Anspruch 7, wobei der Mikroprozessor das Auftreten des Fahrzeugereignisses durch Überwachen einer Zündleitung des Fahrzeugs, um einen Betriebsstatus des Fahrzeugs zu bestimmen, bestätigt.

9. Fahrzeugtelematikvorrichtung nach Anspruch 1, wobei der Mikroprozessor bei dem Empfangen des Wecksignals von der Ereigniserkennungsschaltung angewiesen wird, die Fahrzeugtelematikvorrichtung aus einem Betriebsruhemodus zu wecken.

10. System für die Fahrzeugereigniserkennung, umfassend:
eine Fahrzeugtelematikvorrichtung, die eine Steuerung einschließt, die konfiguriert ist, um in einem Betriebsruhemodus und einem Betriebswachmodus zu arbeiten, wobei die Steuerung relativ zu dem Wachmodus weniger Strom verbraucht, wenn sie sich in dem Ruhemodus befindet; und
eine Fahrzeugereigniserkennungsvorrichtung, einschließlich:
eines Mikrocontrollers, umfassend einen Speicher, der Anweisungen für die Fahrzeugereigniserkennung speichert; und
einer Vielzahl von Analog-Digital-Wandlern (ADCs), die konfiguriert sind, um ein analoges Fahrzeugspannungssignal zu erkennen und um das analoge Fahrzeugspannungssignal in ein digitales Signal umzuwandeln;
wobei die Fahrzeugereigniserkennungsvorrichtung in einem Fahrzeug installiert ist; und wobei die Anweisungen der Fahrzeugereigniserkennungsvorrichtung den Mikrocontroller anweisen, während die Steuerung sich in dem Ruhemodus befindet, zum:
Aufwachen aus einem Betriebsruhemodus;
Messen einer momentanen Fahrzeugspannung unter Verwendung der Vielzahl von ADCs;
Vergleichen der momentanen Fahrzeugspannung mit einer durchschnittlichen Fahrzeugspannung;
falls die Differenz zwischen der momentanen Fahrzeugspannung und der durchschnittlichen Fahrzeugspannung größer als ein erster Schwellenwert oder kleiner als ein zweiter Schwellenwert ist, Ausgeben eines Wecksignals an die Steuerung der Fahrzeugtelematikvorrichtung, andernfalls Zurückkehren in den Betriebsruhemodus,
wobei die Steuerung der Fahrzeugtelematikvorrichtung konfiguriert ist, um als Reaktion auf das Empfangen des Wecksignals von der Ereigniserkennungsschaltung von dem Ruhemodus in den Wachmodus zu wechseln.

11. Fahrzeugereigniserkennungsvorrichtung nach Anspruch 10, wobei das Wecksignal ein Auftreten eines Fahrzeugereignisses anzeigt.

12. Fahrzeugereigniserkennungsvorrichtung nach Anspruch 11, wobei das Fahrzeugereignis mindestens ein Ereignis ist, das aus der Gruppe ausgewählt ist, bestehend aus einem Starten eines Fahrzeugmotors, einem Starthilfegeben für den Fahrzeugmotor, einem Verbinden eines Anhängers mit dem Fahrzeug, einem Lösen eines Anhängers von dem Fahrzeug, einem Einschalten einer elektrischen Winde an dem Fahrzeug, dem Einschalten eines Anlassers des Fahrzeugs, dem Starten eines Generators des Fahrzeugs, dem Verbinden einer Batterie mit dem Fahrzeug und dem Lösen einer Batterie von dem Fahrzeug.

13. Fahrzeugereigniserkennungsvorrichtung nach Anspruch 10, wobei die Ereigniserkennungsvorrichtung eine Komponente der Fahrzeugtelematikvorrichtung ist.

14. Fahrzeugereigniserkennungsvorrichtung nach Anspruch 10, wobei der erste Schwellenwert von der Art des erkannten Fahrzeugereignisses abhängt.

## Revendications

1. Dispositif télématique pour véhicules installé à l'intérieur d'un véhicule, comprenant :
un dispositif de commande comprenant un microprocesseur et une mémoire stockant des instructions, dans lequel le dispositif de commande est configuré pour fonctionner en mode veille et en mode d'éveil et dans lequel le dispositif de commande consomme moins d'énergie en mode veille qu'en mode d'éveil ; et
un circuit de détection d'événement comprenant :
un filtre passe-bas configuré pour filtrer, lorsque le dispositif de commande est en mode veille, une tension d'une batterie du véhicule afin d'éliminer le bruit et de produire une tension filtrée à la sortie du filtre passe-bas ;
un premier filtre passe-haut dont l'entrée est connectée électriquement à la sortie du filtre passe-bas pour recevoir la tension filtrée du filtre passe-bas et configurée pour détecter, lorsque le dispositif de commande est en mode veille, une augmentation de la tension filtrée ;
un premier comparateur dont l'entrée inverseuse est connectée électriquement à une sortie du premier filtre passe-haut et configurée pour comparer, alors que le dispositif de commande est en mode veille, l'augmentation de la tension filtrée à une quantité de tension de référence reçue à une entrée non inverseuse du premier comparateur et, si l'augmentation de la tension filtrée est supérieure à la quantité de tension de référence, pour déclencher le circuit de détection d'événement afin d'émettre un signal d'éveil vers le microprocesseur du dispositif de commande ;
un second filtre passe-haut ayant une entrée électriquement connectée à la sortie du filtre passe-bas pour recevoir la tension filtrée du filtre passe-bas et configuré pour détecter, alors que le dispositif de commande est en mode veille, une chute de la tension filtrée ;
un second comparateur ayant une entrée non inverseuse connectée électriquement à une sortie du second filtre passe-haut et configuré pour comparer, alors que le dispositif de commande est en mode veille, la chute de la tension filtrée à une quantité de chute de tension de référence reçue à une entrée inverseuse du second comparateur et, si la chute de la tension filtrée est inférieure à la quantité de chute de référence, pour déclencher le circuit de détection d'événement afin d'émettre le signal d'éveil vers le microprocesseur du dispositif de commande ;
dans lequel le microprocesseur, lorsqu'il reçoit le signal d'éveil du circuit de détection d'événement, est invité à passer du mode veille au mode d'éveil.

2. Dispositif télématique pour véhicules selon la revendication 1, dans lequel la quantité de tension d'élévation de référence et la quantité de tension d'abaissement de référence sont définies par une quantité de référence matérielle.

3. Dispositif télématique pour véhicules selon la revendication 1, dans lequel la quantité de tension d'élévation de référence et la quantité de tension d'abaissement de référence sont définies par un convertisseur numérique-analogique (DAC) commandé par logiciel.

4. Dispositif télématique pour véhicules selon la revendication 1, dans lequel l'événement du véhicule est au moins un événement choisi dans le groupe constitué par un démarrage du moteur du véhicule, le démarrage d'urgence du moteur du véhicule, la connexion d'une remorque au véhicule, la déconnexion d'une remorque du véhicule, la mise en marche d'un treuil électrique sur le véhicule, la mise en marche d'un moteur de démarrage du véhicule, le démarrage d'un alternateur du véhicule, la connexion d'une batterie au véhicule, et la déconnexion d'une batterie du véhicule.

5. Dispositif télématique pour véhicules selon la revendication 1, dans lequel le circuit de détection d'événements est un composant d'un dispositif télématique pour véhicules.

6. Dispositif télématique pour véhicules selon la revendication 1, dans lequel les filtres passe-haut sont configurés pour détecter les changements rapides dans la tension filtrée et pour filtrer les changements lents dans la tension filtrée du véhicule.

7. Dispositif télématique pour véhicules selon la revendication 1, dans lequel le microprocesseur, après avoir reçu le signal d'éveil du circuit de détection d'événement, est chargé de confirmer l'occurrence d'un événement de véhicule.

8. Dispositif télématique pour véhicules selon la revendication 7, dans lequel le microprocesseur confirme l'occurrence de l'événement de véhicule en surveillant une ligne d'allumage du véhicule pour déterminer un état opérationnel du véhicule.

9. Dispositif télématique pour véhicules selon la revendication 1, dans lequel le microprocesseur, lors de la réception du signal d'éveil du circuit de détection d'événement, est chargé de réveiller le dispositif télématique pour véhicules à partir d'un mode de fonctionnement en veille.

10. Système de détection d'événements pour véhicules, comprenant :
un dispositif télématique pour véhicules comportant un dispositif de commande configuré pour fonctionner en mode veille et en mode d'éveil, dans lequel le dispositif de commande consomme moins d'énergie en mode veille qu'en mode d'éveil ; et
un dispositif de détection d'événement de véhicule comportant :
un microcontrôleur comprenant une mémoire stockant des instructions de détection d'événement de véhicule ; et
une pluralité de convertisseurs analogiques-numériques (ADC) configurés pour détecter un signal de tension analogique du véhicule et pour convertir le signal de tension analogique du véhicule en un signal numérique ;
dans lequel le dispositif de détection d'événements de véhicule est installé dans un véhicule ; et dans lequel les instructions du dispositif de détection d'événement de véhicule demandent au microcontrôleur, alors que le dispositif de commande est en mode veille, de :
se réveiller d'un mode de fonctionnement en veille ;
mesurer une tension instantanée du véhicule à l'aide de la pluralité d'ADC ;
comparer la tension instantanée du véhicule à une tension moyenne du véhicule ;
si la différence entre la tension instantanée du véhicule et la tension moyenne du véhicule est supérieure à une première valeur seuil ou inférieure à une seconde valeur seuil, émettre un signal d'éveil au dispositif de commande du dispositif télématique pour véhicules, sinon, revenir au mode de fonctionnement en veille,
dans lequel le dispositif de commande du dispositif télématique pour véhicules est configuré pour, en réponse à la réception du signal de réveil du circuit de détection d'événement, passer du mode veille au mode d'éveil.

11. Dispositif de détection d'événement de véhicule selon la revendication 10, dans lequel le signal d'éveil indique l'occurrence d'un événement de véhicule.

12. Dispositif de détection d'événement de véhicule selon la revendication 11, dans lequel l'événement de véhicule est au moins un événement choisi dans le groupe constitué par le démarrage du moteur du véhicule, le démarrage d'urgence du moteur du véhicule, la connexion d'une remorque au véhicule, la déconnexion d'une remorque du véhicule, la mise en marche d'un treuil électrique sur le véhicule, la mise en marche d'un moteur de démarrage du véhicule, le démarrage d'un alternateur du véhicule, la connexion d'une batterie au véhicule, et la déconnexion d'une batterie du véhicule.

13. Dispositif de détection d'événements de véhicule selon la revendication 10, dans lequel le dispositif de détection d'événements est un composant du dispositif télématique pour véhicules.

14. Dispositif de détection d'événement de véhicule selon la revendication 10, dans lequel le premier seuil dépend d'un type d'événement de véhicule détecté.
